# EUROPEAN PATENT APPLICATION

(11) **EP 4 454 781 A1**
(43) Date of publication of application: **30.10.2024**
(21) Application number: 23183454.0
(22) Date of filing: 04.07.2023
(51) Int. Cl.: B22C 3/00, B22C 9/00, B28B 7/36, B28B 7/38

(54) **METHOD AND SYSTEM FOR MAKING LONG SIC TUBES**

(30) Priority: 25.04.2023 US 202318139174
(71) Applicant: II-VI Delaware, Inc., Wilmington, DE 19890 (US)
(72) Inventor: DENNENY, Kevin, Wilmington, 19801 (US); MCCORMICK, Allyn, Wilmington, 19801 (US); SALAMONE, Samuel, Wilmington, 19801 (US); KLARNER, Andrew, Wilmington, 19801 (US); AGHAJANIAN, Michael, Wilmington, 19801 (US)
(74) Representative: Schmidt, Christian

(57) **Abstract**

A method for casting a preform part for reaction bonding, the method comprising coating an inner surface of a mold and a mandrel surface with release layers. An assembled mold is formed from the mold and the mandrel and a preform cake is formed by pouring a slurry into a mold cavity and letting it settle. Thermally removing the release layers aids in removing the mandrel and removing the preform cake after pyrolyzing.

## Description

### TECHNICAL FIELD

The present disclosure generally relates to a method and system for making long SiC tubes.

### BACKGROUND

Aspects of the present disclosure relate to a method and system for making long SiC tubes. Various issues may exist with conventional solutions for making long SiC tubes. In this regard, conventional systems and methods for making long SiC tubes may be costly, cumbersome, and/or inefficient.

Limitations and disadvantages of conventional systems and methods will become apparent to one of skill in the art, through comparison of such approaches with some aspects of the present methods and systems set forth in the remainder of this disclosure with reference to the drawings.

### BRIEF SUMMARY OF THE DISCLOSURE

Shown in and/or described in connection with at least one of the figures, and set forth more completely in the claims are a method and system for making long SiC tubes.

These and other advantages, aspects and novel features of the present disclosure, as well as details of illustrated embodiments thereof, will be more fully understood from the following description and drawings.

### BRIEF DESCRIPTION OF THE DRAWINGS

The various features and advantages of the present disclosure may be more readily understood with reference to the following detailed description taken in conjunction with the accompanying drawings, wherein like reference numerals designate like structural elements.
FIG. 1 illustrates an exemplary slip casting process.
FIG. 2 illustrates a reaction bonding process to obtain silicon carbide parts.
FIG. 3 illustrates an exemplary assembly of a mold comprising two clamshell molds and a mandrel.
FIG. 4 illustrates an assembled mold held in a vertical position attached to a mobile rig.
FIG. 5 illustrates an assembled mold held in a horizontal position attached to a mobile rig.
FIG. 6 illustrates the extraction of a mandrel from a mold in a horizontal position.

### DESCRIPTION

The following discussion provides various examples of methods and systems for making long SiC tubes. Such examples are non-limiting, and the scope of the appended claims should not be limited to the particular examples disclosed. In the following discussion, the terms "example" and "e.g.," are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

In industry, ceramic tubes may be used frequently because of their many applications. For example, ceramic tubes may be used for kiln furniture, precision structures, burners, high-temperature fluid or gas piping (e.g., in the petrochemical industry), for high corrosion and/or high wear slurry flow (e.g., in mining or for oil sands), as rollers, for thermocouple protection, in the nuclear industry, and for thermal processing.

Ceramics may be any one of a variety of hard, brittle, heat-resistant and corrosion-resistant materials that are made by shaping and then firing an inorganic material, at a high-temperature. Such materials may include clay, but also carbon or silicon. Popularly known examples may be earthenware, porcelain, and brick. The use of ceramics in industry is due to their ability to withstand chemical erosion that occur in other materials subjected to acidic or caustic environments. Ceramics may also be able to withstand high temperatures.

Ceramic tubes may be made from sintered SiC (silicon carbide), Mullite, or Al₂O₃ (IPS ceramics), for example. A manufacturing method may be slip casting a ceramic particle preform, followed by sintering.

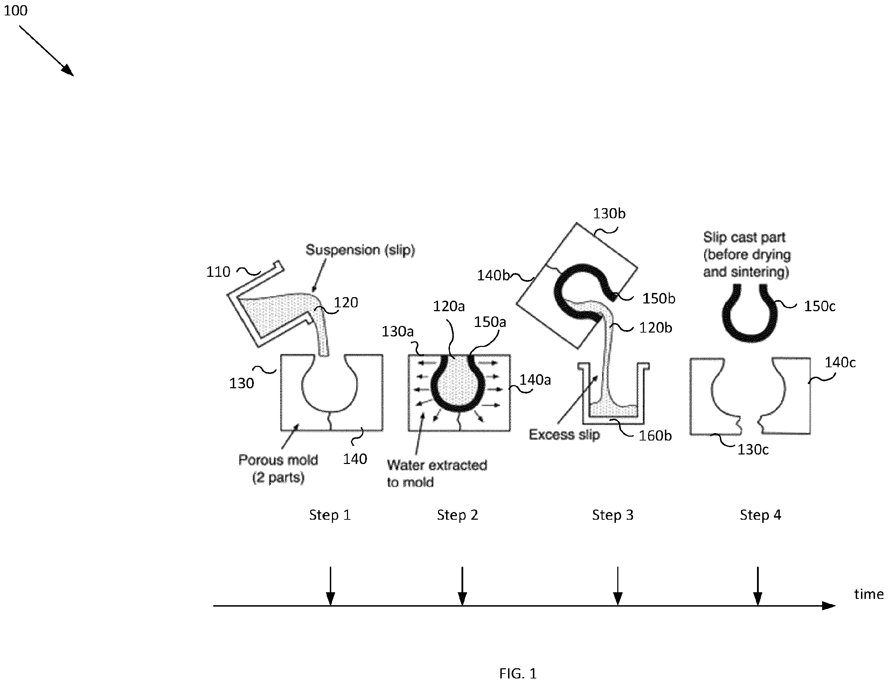

Referring now to FIG. 1, FIG. 1 shows an exemplary slip casting process. There is shown a slip casting process 100, and steps 1 through 4, showing exemplary steps in a slip casting process in time. There are shown containers 110 and 160b, a suspension/slip 120, 120a, and 120b, a 1 st mold part 130, 130a, 130b, 130c, a 2nd mold part 140, 140a, 140b, 140c, a cake 150a, 150b, 150c. The reference numerals without an appended letter may refer to step 1, the reference numerals with an appended letter a through c, may refer to steps 2 through 4, respectively. Elements with similar reference numerals may refer to similar elements.

In step 1, a water-based suspension/slip 120 comprising fine ceramic particles may be poured from a container 110 into a mold. The mold may comprise a 1st mold part 130 and a 2nd mold part 140, suitably coupled together. The mold parts 130, 140 may be made of a porous material, for example, plaster or polymer. The suspension 120 may be a liquid or semi-liquid (paste/gel-like) material comprising fine ceramic particles homogeneously suspended in the liquid. Carbon or a suitable pH balance may assist in keeping the particles homogeneously suspended in suspension 120. The suspension 120 may also be referred to as slip, or slurry.

In step 2, some water in the suspension 120a may be wicked from the suspension 120 into the 1st mold 130a and the 2nd mold 140a because the molds are made from porous material that act hydrophilic. The wicking away of water from suspension 120a into the molds may cause a "consolidated cake" 150a to form on the mold walls. The cake 150a made us comprise a layer of ceramic particles on the mold walls, with comparatively little water content.

In step 3, the remaining excess suspension 120b may be poured out of the molds into some container 160b. The cake 150b may thereby remain on the mold walls. In step 4, the 1st mold part 130c and the 2nd mold part 140c may be separated and the slip cast part 150c may be removed from the mold. The slip cast part 150c may be refer to as a shaped cake, or preform, at this stage. The slip cast part 150c may then be sintered, that is, fired. The sintering process may yield a dense ceramic cast part.

The slip casting process 100 may suffer from a number of issues inherent to the process. For example, the sintering process may shrink the slip cast part 150c by approximately 20%. Furthermore, assuming approximately uniformly porous molds leading to a similar water wicking all over the mold surface, the slip casting process 100 may only be suitable to geometries with constant wall thickness because the cake grows uniformly along the wall of the molds. In addition, the thickness of the cake 150c may not be exactly controlled, as there is no mold element controlling the thickness, other than the wicking action. The thickness of the cake 150c may typically be accurate to within 1 mm. Another problem may be that the suspension 120 may preferably comprise homogeneously suspended fine ceramic particles. To obtain a suspension 120 that may remain homogeneous over some time, i.e., the fine ceramic particles do not settle at the bottom of the mold, may be formulated only using few organic additives. This is also due to the requirement that the organic additive may not clog the molds 130, 140. Clogging the molds 130, 140 may restrict the wicking action of the molds to extract the water and thus form the cake 150a.

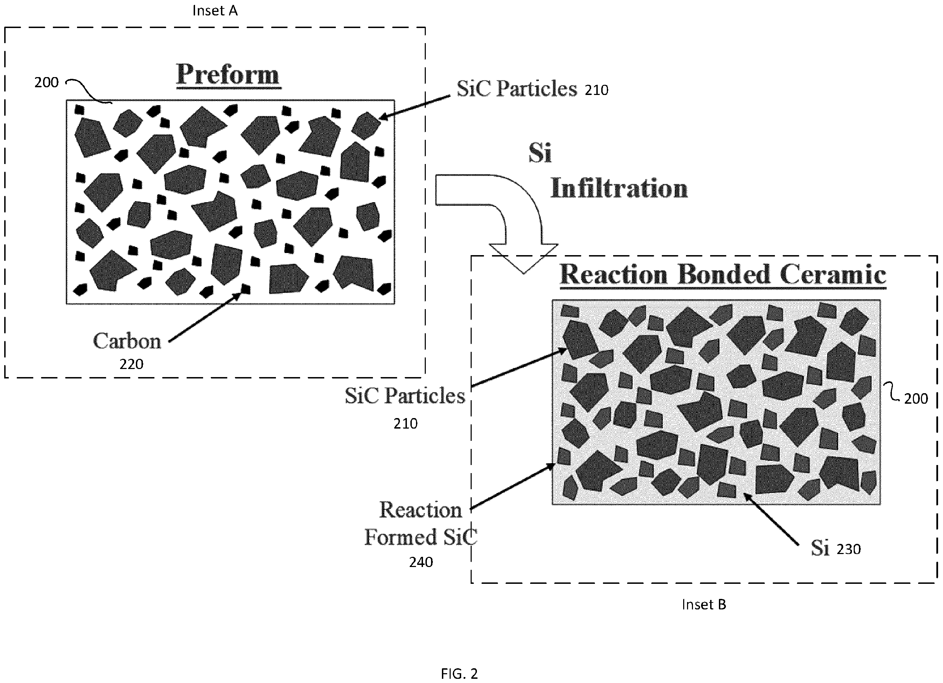

FIG. 2 illustrates an exemplary process to make reaction bonded silicon carbide. There is shown an inset A corresponding to an initial step, and an inset B, corresponding to a second step. Reaction bonded silicon carbide (RB-SiC or SiSiC) parts may be manufactured as will now be described with reference to inset A and inset B. With reference to inset A, there is shown a preform 200 comprising SiC particles 210, and carbon particles 220. The preform 200 for reaction bonding may typically be made by casting a slurry/suspension comprising SiC particles 210, carbon particles 220 and an organic (not shown) that may convert to carbon upon pyrolysis, for example, phenolic. As will be clear to the person skilled in the art, many other suitable compositions and variations of slurry exist and the present disclosure shall not be limited to the above disclosed slurry compositions.

The preform cake 200 may then be infiltrated with molten silicon. The molten silicon may act as both a reagent and a bonding agent. Upon infiltration, the molten silicon reacts with the carbon 220 to form reaction-formed SiC 240 and bonding the structure together, as illustrated in inset B. As shown in inset B, the final composite may comprise the original SiC particles 210, the reaction-formed SiC 240, and residual silicon 230. The composite RB-SiC may have the advantage of nominally not shrinking during this process. A further advantage may be the use of coarse SiC particles 210 because in the process it may be desirable for the particles to settle to the bottom of the cast. In contrast to slip casting requiring a suspension comprising homogeneously suspended particles, in reaction bonding, it is desirable for the particles and the water to separate, once the slurry is in the cast.

As mentioned above, sintering may shrink the slip cast part by nominally 20%. Correspondingly, a slip cast tube may nominally shrink 20% during the sintering process, thereby shorten. Without such shrinkage, longer tubes may be produced in a given furnace size. Because reaction bonding, as discussed above, exhibits nominally no shrinking, reaction bonded SiC tubes do not shrink like sintered tubes. Because reaction bonding does not significantly shrink the cast part, defects due to shrinking such as cracks, internal stress, etc. are of lesser concern and permit the manufacturing of more complex shapes.

Slip casting, thus, may not be a suitable approach to obtain a reaction bonding preform cake 200 because reaction bonding uses relatively coarse ceramic particles 210 that quickly settle in a slurry (by Stokes law). As discussed above, quickly settling particles and thus an unstable suspension is not suitable for slip casting. One immediate consequence of an unstable suspension may be an uneven thickness of the slip cast part 150c. Also, reaction bonding may require a high level of organic material in the slurry (e.g., phenolic) that may be used to create carbon upon pyrolysis. This organic may not be suitable to slip casting, as it may clog the porous mold. A suitable process to manufacture RB-SiC tubes will now be discussed.

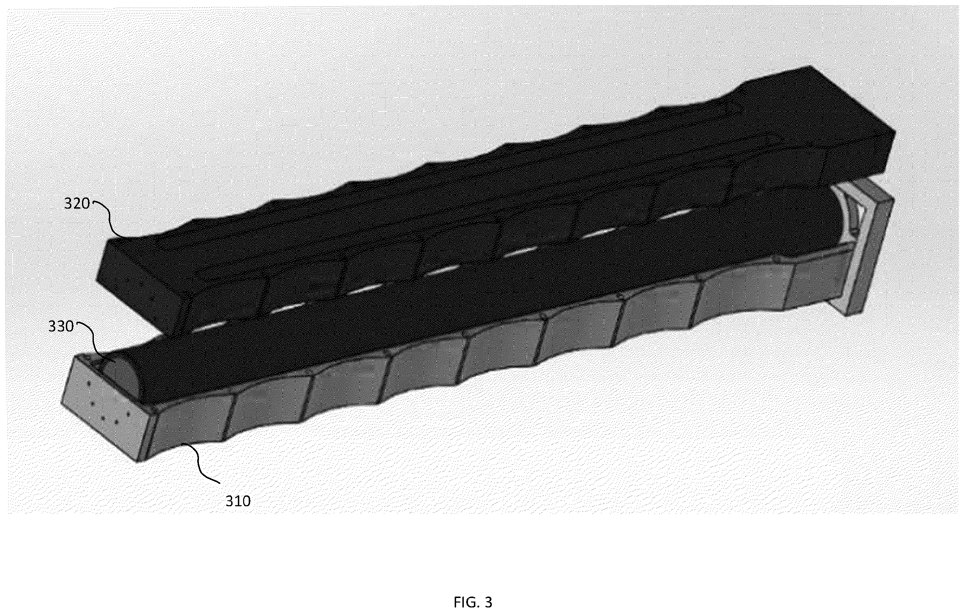

FIG. 3 to FIG. 6 illustrates a preform manufacturing process suitable for RB-SiC tubes. Referring to FIG. 3, there is shown the 1st clamshell mold 310, the 2nd clamshell mold 320, and a mandrel 330. A mold may be formed by coupling a 1st clamshell mold 310 to a 2nd clamshell mold 320. This mold may define the shape and outer diameter of a tube to be cast. The clamshell molds 310, 320 may be non-permeable, in contrast to porous molds for slip casting. The mandrel 330, i.e., the core, may be enclosed within the coupled clamshell molds 310 and 320 to form an assembled mold. The mandrel 330 may define the inner shape and diameter of the tube to be cast. In contrast, slip casting as illustrated in FIG. 1 does not comprise a mandrel.

Both the inside surfaces of the clamshell molds 310 and 320, and the mandrel 330 may be covered in an organic release layer. The organic release layers may be operable to permit the cast preform to be extracted from the mold, and for the mandrel 330 be removed from the cast preform.

In accordance with various embodiments of the patent, the inside of the clamshell molds 320 and 330 may be sprayed with acrylic for a release layer. The acrylic release layer may mount/burn off at approximately 160°C. The acrylic release layer may be operable to be burned off once the preform cake may be settled, so that the cast preform tube may be removed from the mold easily. As will be known to the person skilled in the art, many other polycarbonates instead of acrylic may be suitable for the release layer.

The mandrel 330 may be covered in a sheet wax layer for a release layer. The sheet wax release layer on the mandrel 330 may melt/burn off at approximately 80°C. The sheet wax release layer may be operable to be burned off prior to extracting the mandrel 330 from the mold.

The mandrel 330, covered in sheet wax, may be inserted into the coupled molds 310, 320, both of which may be covered by a spray-on acrylic layer. This assembled mold may form a mold cavity between mandrel and mold.

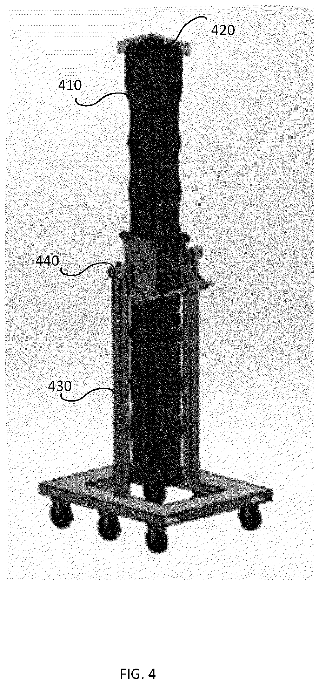

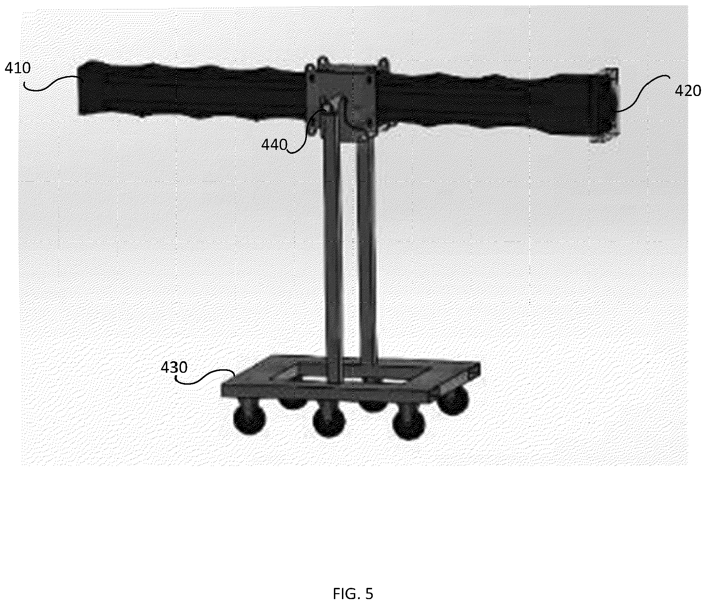

With reference to FIG. 4, there is shown an assembled mold 410, a fill opening 420, and a rig 430. The assembled mold 410 may comprise the clamshell molds 310, 320, and the mandrel 330, as described with reference to FIG. 3. The fill opening 420 may be operable to receive the reaction bonding slurry into the assembled mold 410. The rig 430 may be operable to hold the assembled mold 410 in a desirable position. The rig 430 may comprise wheels, so that it may be moved from mold assembly to a furnace and further to disassembly of the mold, for example. The rig 430 may further comprise an axis-mounted clamp 440 operable to fixate the assembled mold 410 to the rig 430. The axis-mounted clamp 440 may permit the assembled mold 410 to be rotated into a horizontal position, as illustrated in FIG. 5. The elements with same reference numerals shown in FIG. 5 may be identical to those shown in FIG. 4.

Correspondingly, after the assembled mold 410 is mounted on the rig 430 and rotated into the desirable vertical position illustrated in FIG. 4, the RB-SiC slurry may be poured into the mold cavity through the fill opening 420. The slurry may then be permitted to sediment into a rigid preform cake.

Using a sheet wax layer for the release layer on the mandrel 330 may be advantageous because the sheet wax layer may be thicker than an acrylic spray-on release layer. Even though a reaction bonding silicon carbide manufacturing process may nominally not shrink the preform 200, the preform 200 may tighten around the mandrel 330 when the slurry sediments into the rigid preform cake. Correspondingly, a slightly thicker release layer may be advantageous to be used around the mandrel 330, so that the mandrel 330 may be removed more easily and to ensure that the preform 200 may not break/crack during the settling process. Because applying a sheet wax layer may be more costly and more time-consuming than applying an acrylic spray-on release layer, it may generally be preferable to use acrylic on the clamshell molds 310, 320.

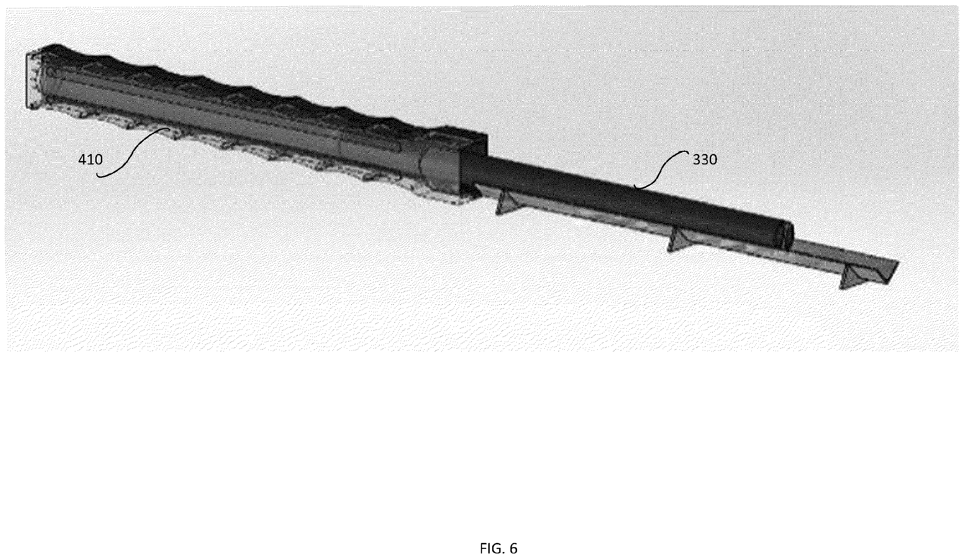

The rig 430 comprising the assembled mold 410 may then be moved to a heating chamber/furnace (not shown). In the furnace, the mold assembly 410 may be heated to approximately 85°C, thus permitting the sheet wax release layer on mandrel 330 to melt. The rig 430 may then be removed from the furnace and the assembled mold 410 may be rotated into a horizontal position, as illustrated in FIG. 5. Because the sheet wax layer on mandrel 330 may have melted, the mandrel 330 may now be extracted from the assembled mold 410, as illustrated in FIG. 6. In accordance with various embodiments of the patent, the mandrel 330 may be extracted before further heating or after further heating, as described in the next paragraph. Extracting the mandrel 330 before further heating may be advantageous to drying times.

The mold assembly 410 may then be removed from the rig 430, and placed in a furnace. In the furnace, the mold assembly 410 may be heated to greater than 500°C, typically in nitrogen gas (N₂). This heating in an inert gas may permit the acrylic release layer on the inside surfaces of the mold assembly 410 to decompose and the organic slurry comprising e.g., phenolic to pyrolyze into carbon. Thus, this heating process may result in the cast preform 200, as illustrated in FIG. 2. As known to the person skilled in the art, the patent disclosure shall not be limited to the use of nitrogen gas, as any other inert gas or gas mixture may be used.

The mold 410 may then be removed from the furnace, where the assembled mold 410 may be disassembled. Because the acrylic release layer may have decomposed during the heating, the preform 200 may be removed easily from the mold by disassembling the clamshell molds 310, 320. As will be clear to the person skilled in the art, the assembled mold 410 may similarly be disassembled in a vertical position.

As described above for FIG. 2, the cast preform 200 comprising carbon particles 220 and SiC particles 210 may then be infiltrated with molten silicon to yield the finished reaction bonded silicon carbide ceramic tube.

The exemplary process using a molding process with a mandrel may permit better tolerances of approximately +/- 0.25 mm compared to slip casting and sintering, resulting in a tolerance of approximately +/-1 mm. As previously mentioned, this is mostly because shrinkage may be avoided. Furthermore, the use of mandrel 330 may permit the exact control of the inner diameter, allowing cast parts with variable inner diameters. This is in contrast to slip casting, which may produce only constant wall thickness.

The described process may also be more cost effective than a slip casting and sintering process because a reaction bonding silicon carbide process may be operable at lower temperatures. For example, a sintering process may require maximum temperatures of approximately 2000°C, while the reaction bonding silicon carbide process may require maximum temperatures of approximately 1400°C to melt silicon for the infiltration process. Because the reaction bonding silicon carbide process uses lower temperatures, the cost of raw materials, machinery, and energy used in the process may be lower than those required for the slip casting and sintering process.

The present disclosure includes reference to certain examples; however, it will be understood by those skilled in the art that various changes may be made and equivalents may be substituted without departing from the scope of the disclosure. In addition, modifications may be made to the disclosed examples without departing from the scope of the present disclosure. Therefore, it is intended that the present disclosure not be limited to the examples disclosed, but that the disclosure will include all examples falling within the scope of the appended claims.

## Claims

1. A method for casting a preform part for reaction bonding, the method comprising:
coating an inner surface of a mold with a first release layer;
coating a mandrel surface with a second release layer;
inserting said coated mandrel into said coated mold to form an assembled mold, said assembled mold comprising a mold cavity;
pouring a slurry into said mold cavity;
forming a preform cake by allowing said slurry to settle in said mold cavity;
thermally removing said second release layer;
extracting said mandrel from said assembled mold;
pyrolyzing an organic content of said preform cake into a carbon content; and
thermally removing said first release layer.

2. The method according to claim 1, wherein a space in said assembled mold between said coated mandrel and said coated mold is forming said mold cavity.

3. The method according to claim 1, comprising heating said second release layer to >80°C to thermally remove said second release layer through melting or burning off.

4. The method according to claim 1, comprising heating said preform cake and said first release layer to >500°C to achieve said pyrolyzing and said thermally removing said first release layer.

5. The method according to claim 1, wherein coating said inner surface of a mold comprises coating of inner surfaces of a plurality of mold parts and where said plurality of mold parts form said mold.

6. The method according to claim 1, comprising forming said mold from a plurality of clamshell molds.

7. The method according to claim 5, wherein said plurality of mold parts are clamshell molds.

8. The method according to claim 1, wherein said first release layer is an acrylic layer.

9. The method according to claim 8, comprising spraying on said acrylic layer.

10. The method according to claim 1, wherein said second release layer is a sheet wax layer.

11. The method according to claim 1, wherein said first release layer and/or said second release layers are organic release layers.

12. The method according to claim 1, wherein said slurry is a liquid comprising silicon carbide particles and organic content.

13. The method according to claim 12, wherein said organic content comprises an organic binder.

14. The method according to claim 1, wherein the preform part is a tube.

15. The method according to claim 1, comprising infiltrating said preform part with molten silicon to form a reaction bonded silicon carbide part.

16. The method according to claim 15, wherein said preform part is a tube.

17. The method according to claim 1, comprising choosing a separation between said mandrel and said mold in said assembled mold such that said separation is different in different locations of said assembled mold to result in a preform cake of varying thickness.
